Europäisches Patentamt

European Patent Office

Office européen des brevets

(11) Veröffentlichungsnummer: **0 019 593**
**A1**

## (12) EUROPÄISCHE PATENTANMELDUNG

(21) Anmeldenummer: 80810163.8

(22) Anmeldetag: 14.05.80

(51) Int. Cl.³: **A 47 L 1/08**
**B 60 S 3/04**
**//A47K1/02**

(30) Priorität: 15.05.79 CH 4489/79
18.10.79 CH 9397/79

(43) Veröffentlichungstag der Anmeldung:
26.11.80 Patentblatt 80/24

(84) Benannte Vertragsstaaten:
BE IT

(71) Anmelder: Weick, Heinz Hermann
94, rue de la Servette
CH-1202 Genf(CH)

(72) Erfinder: Hesener, Walter
66, rue de la Prulay
CH-1217 Meyrin-Genf(CH)

(54) Behälter zum Aufbewahren von Kraftfahrzeug-Waschutensilien.

(57) Vorliegende Erfindung betrifft einen Behälter mit einer Aufbewahrungskammer für wenigstens ein Kraftfahrzeug-Waschutensil, der desweiteren zur Aufnahme von Wasser ausgebildet ist.

Eine solche Einrichtung wird insbesondere benötigt, wenn während der Fahrt plötzlich die Lampen oder Scheiben eines Fahrzeugs verschmutzt sind oder das Wasser der Scheibenwaschanlage ausgegangen ist.

Bekannte Behälter solcher Art haben den Nachteil, dass das Waschutensil speziell ausgebildet ist und direkt im Reservewasser lagert, das daher, schnell verschmutzt.

Beim erfindungsgemässen Behälter sind solche und weitere Nachteile vermieden. Er zeichnet sich dadurch aus, dass eine flüssigkeitsdichte, als Wasserreservoir ausgebildete zweite Kammer 3 mittels einer verschliessbaren Oeffnung 1c mit der Aufbewahrungskammer 4a für das Waschutensil 5 kommuniziert.

Während man bei allen vorbekannten Lösungen das Reservewasser stets direkt mit dem Waschutensil in Berührung bringt, geschieht es beim vorliegenden Behälter auf handliche Weise Indirekt. Das hat unter anderem den Vorteil, dass das Reservewasse sauber bleibt.

./...

Fig.1

Behälter zum Aufbewahren von Kraftfahrzeug-Waschutensilien

Technisches Gebiet:

Vorliegende Erfindung betrifft einen Behälter mit einer durch einen Deckel abgeschlossenen Kammer zum Aufbewahren und Mitführen wenigstens eines behälterunabhängigen, saugfähigen Kraftfahrzeug-Waschutensils wie Schwamm, Mückenschwamm, Hirschleder u.dgl., welcher desweiteren zur flüssigkeitsdichten Aufnahme von Wasser ausgebildet ist, und bei dem die Aufbewahrungskammer sogleich zur saugenden Wasserentnahme durch das Waschutensil dient.

Jeder Kraftfahrer steht häufig vor der Notwendigkeit, insbesondere Lampen, Rückspiegel und Scheiben seines Fahrzeugs reinigen zu müssen, ohne dafür im gegebenen Zeitpunkt das notwendige Wasser zur Verfügung zu haben. Die Folge ist z.B., dass bei Dunkelheit und verschmutzten Strassen häufig mit völlig verschmutzten Lampen, d.h. mit lebensgefährlich unzureichendem Licht gefahren wird. Nicht wenige Unfälle haben hierin ihre Ursache. Auch zur Beseitigung gewisser Karrosserieverschmutzungen ist es wünschenswert, stets z.B. einen Schwamm und wenigstens etwas Wasser im Kraftfahrzeug aufzubewahren.

Zugrunde liegender Stand der Technik:

Es ist bekannt, dass der eine oder andere Fahrer eine Flasche o.dgl. mit Wasser mitführt, oder einen in einem kleinen Behälter bzw. einer Plastiktüte untergebrachten feuchten Schwamm. Es handelt sich hier um Ausnahmefälle.

Zudem ist die erste Lösung unpraktisch, während bei der zweiten der Wasserinhalt des Schwammes kaum für mehr als eine Benutzung reicht und auch ein nachträgliches Auswaschen des Schwammes nicht möglich ist.

Es wird seit langem nach einer besseren Lösung gesucht. Dabei ist man bisher zwei verschiedene Wege gegangen. Der erste beseht in einer festen Verbindung zwischen einem kleinen, von einer Hand zu umfassenden Wasserbehälter und einem Schwamm. Das Wasser läuft bei Bedarf z.B. durch ein Ventil o.dgl. direkt in den Schwamm. Ein typisches Gerät dieser Art zeigt beispielsweise die US-Patentschrift Nr. 3 698 824. Bei all diesen Konstruktionen besteht der Nachteil, dass der Behälter einschliesslich des Wassers beim Reinigungsvorgang ebenfalls manipuliert werden muss. Das ist entweder sehr unhandlich oder der Behälter ist so klein gestaltet, dass er nur eine sehr geringe Wassermenge aufnehmen kann. Ausserdem benutzen viele lieber einen völlig freien Schwamm oder mehrere, den verschiedenen Reinigungszwecken angemessene verschiedene Reinigungsorgane.

Der zweite Lösungsweg basiert auf der Idee, Wasser und zugleich ein schwammartiges Waschorgan in einem Behälter unterzubringen.

Eine erste Vorrichtung dieser Art zeigt die UK-Patentschrift Nr. 917 564. Bei dieser ruht ein Schwamm bei Nichtgebrauch in einer flüssigkeitsdicht verschlossenen Wasserkammer, während ein mit dem Schwamm verbundener Handgriff nach aussen herausragt. Man ist auch hier wieder auf ein ganz spezielles Reinigungsorgan beschränkt. Beim Auswaschen des Schwammes verschmutzt man sogleich das gesamte Reservewasser. Der offene Behälter kann leicht umkippen und sich entleeren. Die FR-Patentschrift Nr. 2 194 397 betrifft eine Vorrichtung der gleichen Art. Hier ist das Waschorgan als dichter, aussen schwammartiger Handschuh ausgebildet, dessen Oeffnung mit einem Dichtungsrand versehen ist, der von einem Verschluss-

0019593

deckel übergriffen wird. Abgesehen davon, dass mancher einen gewöhnlichen Schwamm einem Handschuh vorzieht, ist dieses Gerät verhältnismässig kompliziert und aufwendig. Beim Auswaschen des Handschuhes wird wieder das gesamte Reservewasser verschmutzt. Auch hier besteht die Gefahr des Umkippens und Ausfliessens.

Offenbarung der Erfindung:

Vorliegender Erfindung liegt die Aufgabe zugrunde, eine äusserst preiswerte und praktische Einrichtung zu schaffen, bei der alle vorher aufgezeigten Nachteile vermieden sind. Sie geht dabei von den Vorschlägen des zuletzt genannten Lösungsweges aus.

Die Erfindung besteht nun darin, dass bei einem eingangs genannten Behälter eine flüssigkeitsdichte, als Wasserreservoir ausgebildete zweite Kammer mittels einer verschliessbaren Oeffnung mit der Aufbewahrungskammer für das Waschutensil kommuniziert.

Während man das Wasser bei allen vorbekannten Lösungen stets direkt mit dem Schwamm o.dgl. in Berührung bringt, geschieht es beim erfindungsgemässen Behälter indirekt, indem jeweils vorher eine dosierte Abfüllwassermenge auf praktische Weise in die Schwamm-Aufbewahrungskammer umgefüllt wird.

Die Vorteile bestehen unter anderem darin, dass im Behälter nicht nur ein Waschorgan unterbringbar ist, sondern je nach Bedürfnis auch mehrere und zwar beliebiger Art. Diese lagern vom Wasser getrennt. Das Auswaschen eines verschmutzten Waschutensils geschieht in dafür abgefülltem Wasser in der Aufbewahrungskammer, so dass das Reservewasser sauber bleibt.

Nach weiterer Erfindung ist die Wasserkammer wenigstens mit einem Teil ihres Rauminhalts unterhalb des Bodens der Dosierkammer angeordnet, wobei sich die Auslassöffnung in mittelbarer Nähe wenigstens einer äusseren Seitenwand des Aufbewahrungsraumes im Boden desselben befindet. Dadurch ist die abzufüllende Wassermenge durch Kippen des Behälters auf handliche Weise dosierbar.

Ein erfindungsgemässer ringförmiger Vorsprung der Wasserkammeröffnung verhindert den Rückfluss einer bestimmten Menge abgefüllten Wassers.

Weitere Erfindungsmerkmale gehen aus der Figurenbeschreibung hervor.

Beschreibung der Zeichnungsfiguren:

In der Zeichnung ist ein Ausführungsbeispiel der Erfindung dargestellt. Es zeigen:

Fig. 1      einen Längsschnitt eines Behälters (einschliesslich darin untergebrachter Waschutensilien),

Fig. 2      einen Querschnitt A-A nach Fig. 1 mit geöffnetem Deckel (ohne Waschutensilien),

Fig. 3      einen Teilaufriss nach Fig. 2,

Fig. 4      in schematischer Darstellung einen Längsschnitt durch einen Behälterunterteil während des Abfüllens von Wasser und

Fig. 5      einen Längsschnitt wie Fig. 4 mit zur Entnahme durch einen Schwamm abgefülltem Wasser.

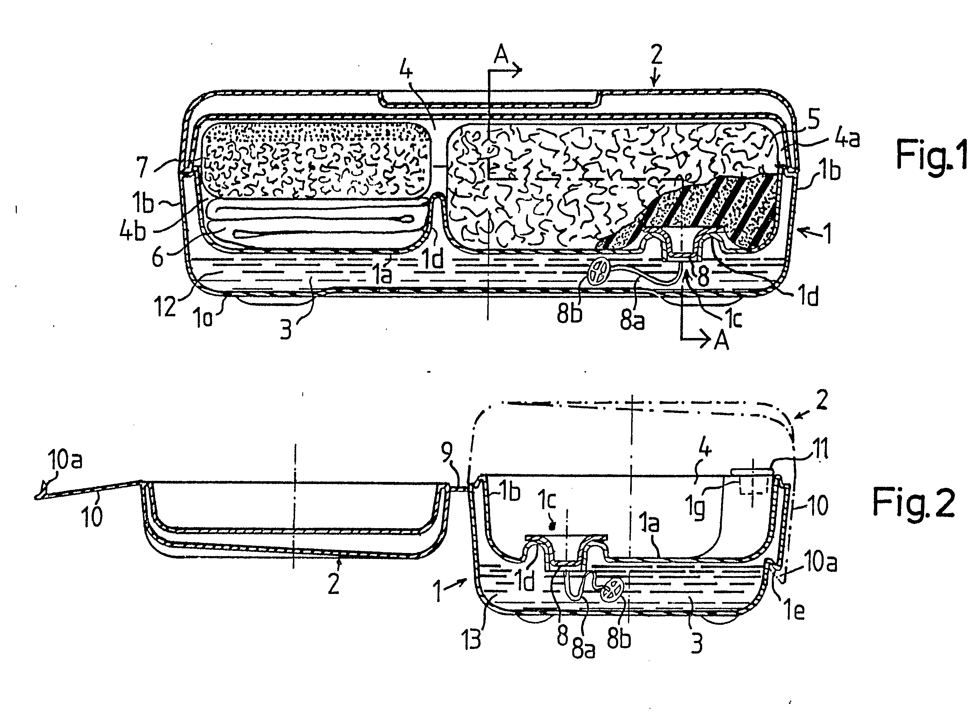

Entsprechend dem Ausführungsbeispiel nach den Fig. 1 und 2 besteht der Behälter aud er Schale 1 und dem Deckel 2. Die Schale weist zwei Kammern 3, 4 auf, von denen die untere ein flüssigkeitsdicht verschliessbares Wasserreservoir darstellt und nachfolgend Wasserkammer genannt wird, während die nach oben offene zweite Kammer 4 zunächst einmal zur Aufbewahrung von Waschutensilien dient. Nach Fig. 1 befinden sich in ihr: ein normaler Waschschwamm 5, ein Hirschleder 6 sowie ein mit einer Scheuerschicht belegter Mückenschwamm 7. Die Trennwand 1a bildet zugleich

0019593

die obere Deckwand der Wasserkammer 3 und den Boden der Aufbewahrungskammer 4. Die Schalenseitenwandungen 1b sind im Höhenbereich der Kammer 4 doppenwandig ausgebildet und gehen nach unten einerseits in den Schalenboden 1o und andererseits in den Kammerboden 1a über. Die Wasserfüllung ist mit 12 bezeichnet.

Im Boden 1a befindet sich eine durch einen Stöpsel 8 verschlossene Einfüll- bzw. Auslassöffnung 1c. Sie ist von einem den Boden 1a nach oben überragenden ringförmigen Wulst 1d umgeben und - in Draufsicht gesehen - mittelbar in einem Schaleneckbereich plaziert.

Eine gewisse Teilung der Kammer 4 für die Putzutensilien in die Bereiche 4a, 4b wird durch den dem Boden 1a angeformten doppenwandigen Trennsteg 1d herbeigeführt. Der Bereich 4a dient in später beschriebener Weise zusätzlich als Wasserdosierkammer.

Der ebenfalls doppelwandige Deckel 2, die Schale 1, das zwischen diesen Teilen angeformte Scharnier 9 sowie eine dem Deckel 2 scharnierartig angeformte Rastzunge 10 sind als ein Formteil im Kunststoff-Blasverfahren hergestellt. Im verschlossenen Zustand untergreift ein Rastvorsprung 10a der Rastzunge 10 einen Rastrücksprung 1e der Schale 1.

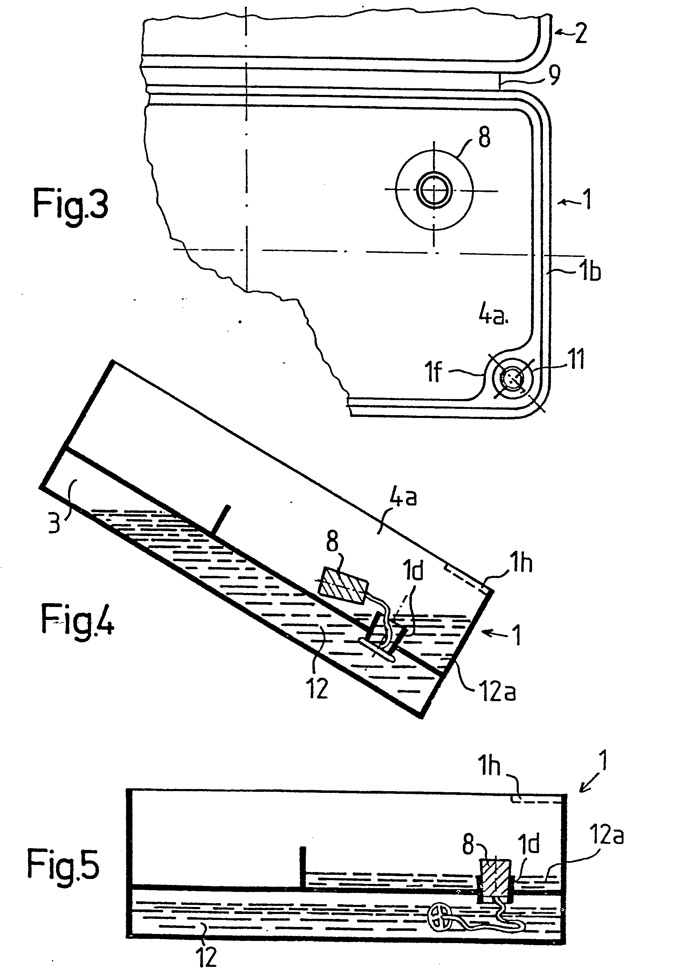

Wie aus den Fig. 2 und 3 ersichtlich, ist der innere Wandungsbereich 1f der vorderen rechten Schalenecke nach innen zurückversetzt. In dem dadurch gebildeten, in der Oeffnungsebene liegenden vergrösserten Flächenbereich ist eine zweite, ebenfalls durch einen Stöpsel 11 verschlossene Wasserkammeröffnung 1g angeordnet.

Der Behälter wird wie folgt gehandhabt:

Bei geöffnetem Deckel 2 wird zunächst mindestens der Waschschwamm 5 aus der Kammer 4a entnommen. Bei herausgezogenem Stöpsel 8, der jedoch infolge der Schnur 8a und der an dieser befestigten gelochten Scheibe 8b mit der Schale 1 verbunden bleibt, kippt man den Behälter entsprechend der schematisch dargestellten Fig. 4. Dadurch fliesst eine gewisse Wassermenge 12a aus der Wasserkammer 3 in den entsprechenden Eckbereich des nun zur Dosierung dienenden Kammerbereichs 4a. Um bei der dargestellten Ausbildung der Austrittsöffnung 1c während des Abfüllens von Wasser einen Lufteintritt in die Wasserkammer 3 zu ermöglichen, können auf die flexibel ausgebildeten Böden 1a, 1o manuell membranenartige, den Rauminhalt der Wasserkammer 3 verändernde Druckbewegungen ausgeübt werden. Wird die Schale 1 nun wieder waagerecht gestellt, so verbleibt die abgefüllte Wassermenge 12a dank dem Wulst 1d auch bei geöffneter Auslassöffnung 1c im Kammerbereich 4a und kann mit einem der Schwämme 5, 7, dem Hirschleder 6 oder einem beliebigen Lappen durch Aufsaugen entnommen werden. In gleicher Weise dient die Kammer 4a zum Auswaschen beispielsweise eines verschmutzten Schwammes. Anschliessend wird der Behälter wieder im in Fig. 1 gezeigten Zustand z.B. im Fahrzeug-Kofferraum versorgt.

Aus Fig. 4 geht hervor, dass die dosierbare Wassermenge durch die spezielle geometrische Anordnung der Auslassöffnung 1c im Boden 1a bestimmt ist. Zusätzlich kann die Abfüllmenge auch durch einen entsprechend den Fig. 4 und 5 in der Schalenöffnungsebene angeformten Steg 1h vergrössert werden.

Zum Wassereinfüllen lässt man bei abgezogenem Stöpsel 8 einfach Frischwasser in die Kammer 4a einlaufen. Sobald die Wasserkammer 3 gefüllt ist, wird der Stöpsel 8 wieder eingesetzt. Das überschüssige Wasser wird ausgeschüttet.

Die zweite Wasserkammeröffnung 1g kann beim Auffüllen der Kammer 3 als Luftauslass dienen. Zudem erlaubt sie ein Durchspülen und somit gründliches Reinigen der Wasserkammer 3. Wird die zweite Oeffnung 1g bei der Wasserentnahme als Lufteinlass benutzt, so erübrigt sich der erwähnte Pumpvorgang.

0019593

Durch die Herstellung der Schale 1 im Kunststoff-Blasverfahren lässt sich diese sogleich einteilig herstellen,
wodurch eine sonst erforderliche aufwendige Verklebung
oder Ultraschallverschweissung einschliesslich Dichtigkeitsprüfung entfallen.

Patentansprüche

1. Behälter mit einer durch einen Deckel abgeschlossenen Kammer zum Aufbewahren und Mitführen wenigstens eines behälterunabhängigen, saugfähigen Kraftfahrzeug-Waschutensils wie Schwamm, Mückenschwamm, Hirschleder u.dgl., welcher desweiteren zur flüssigkeitsdichten Aufnahme von Wasser ausgebildet ist und bei dem die Aufbewahrungskammer sogleich als Raum zur saugenden Wasserentnahme durch das Waschutensil dient, dadurch gekennzeichnet, dass eine flüssigkeitsdichte, als Wasserreservoir ausgebildete zweite Kammer (3) mittels einer verschliessbaren Oeffnung (1c) mit der Aufbewahrungskammer (4a) für das Waschutensil (5) kommuniziert.

2. Behälter nach Anspruch 1, dadurch gekennzeichnet, dass sich die Wasserkammer (3) wenigstens mit einem Teil ihres Rauminhalts unterhalb des Bodens (1a) der Aufbewahrungskammer (4a) befindet, und dass die beiden Kammern (3, 4a) durch eine ein Verschlussmittel (8) aufweisende, im genannten Boden (1a) angeordnete Auslassöffnung (1c) miteinander verbunden sind.

3. Behälter nach Anspruch 2, dadurch gekennzeichnet, dass sich die Wasserkammer (3) praktisch völlig unterhalb des Bodens (1a) der Aufbewahrungskammer (4a) befindet.

4. Behälter nach Anspruch 2, dadurch gekennzeichnet, dass sich die Auslassöffnung (1c) des Bodens (1a) zwecks Dosierung einer zu entnehmenden Teilwassermenge in mittelbarer Nähe wenigstens einer äusseren Seitenwand (1b) des Aufbewahrungsraumes (4a) befindet.

5. Behälter nach Anspruch 2, dadurch gekennzeichnet, dass die Ausflussöffnung (1c) von einer ringförmigen, der Rückflusshinderung dienenden Erhöhung (1d) umgeben ist.

6. Behälter nach Anspruch 2, gekennzeichnet durch einen wenigstens den die Kammern (3, 4a) aufweisenden Behälter-

0019593

teil (1) umfassenden Kunststoff-Blaskörper, bei dem sich die Wasserkammer (3) zur Oeffnungsebene der Aufbewahrungskammer (4a) hin in letztere umschliessende, doppelwandige Seitenwandungen (1b) fortsetzt, und dass der Behälterteil (1) zur Erzielung einer Pumpwirkung durch manuelle, membraneartige, den Rauminhalt der Wasserkammer (3) verändernde Druckbewegungen auf die Böden (1a, 1o) flexibel ausgebildet ist.

7. Behälter nach Anspruch 1, gekennzeichnet durch eine mittels wenigstens eines Steges (1d) in wenigstens zwei Bereiche (4a, 4b) aufgeteilte Aufbewahrungskammer (4) für Putzutensilien (5, 6, 7), von denen ein Bereich (4a) mit der Wasserkammer (3) kommuniziert.

8. Behälter nach Anspruch 6, dadurch gekennzeichnet, dass sich im Bereich des Oeffnungsrandes der Aufbewahrungskammer (4a) eine zweite verschliessbare Wasserkammeröffnung (1g) befindet.

Fig.1

Fig.2

0019593

Fig.3

2

9

8

1

1b

4a.

1f    11

Fig.4

3

4a

8

1d

1h

1

12

12a

Fig.5

1h    1

8    1d

12a

12

**Europäisches Patentamt**

**EUROPÄISCHER RECHERCHENBERICHT**

Nummer der Anmeldung

EP 80 81 0163

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | GB - A - 419 713 (DESSAR) <br> * Ansprüche; Figuren * <br><br> -- | 1-3,6-8 | A 47 L 1/08 <br> B 60 S 3/04// <br> A 47 K 1/02 |
| | AU - A - 28661/71 (WELLESLEY) <br> * Seite 5, Zeilen 4-12; Anspruch 6 * <br><br> -- | 1-6,8 | |
| | CH - A - 356 574 (SOLBACH) <br> * Ansprüche; Figuren * <br><br> -- | 1-3 | |
| A | GB - A - 849 092 (BOARD) <br> * Seite 2, Zeilen 33-46; 127-130; Seite 3, Zeilen 1-12 * <br><br> -- | 1 | RECHERCHIERTE SACHGEBIETE (Int. Cl. ³) <br><br> A 47 L <br> A 47 K <br> B 60 S <br> B 65 D <br> G 01 F <br> B 60 R |
| A | DE - C - 812 584 (GERLING) <br> * Ansprüche; Figuren * <br><br> -- | 1-7 | |
| A | US - A - 2 898 606 (FELLER) <br> * Spalte 3, Zeilen 31-47 * <br><br> -- | 1-3 | |
| A | FR - A - 685 828 (MOREL) <br> * Seite 1, Zeilen 29-64 * <br><br> -- | 1-3 | KATEGORIE DER GENANNTEN DOKUMENTE |
| D,A | FR - A - 2 194 397 (BELLET) <br> * Figuren * <br><br> -- ./. | 1 | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |
| ✓ | Der vorliegende Recherchenbericht wurde für alle Patentansprüche erstellt. | | &: Mitglied der gleichen Patentfamilie, übereinstimmendes Dokument |
| Recherchenort <br> Den Haag | Abschlußdatum der Recherche <br> 16-07-1980 | Prüfer <br> D'HULSTER | |

EPA form 1503.1  06.78

**Europäisches Patentamt**

**EUROPÄISCHER RECHERCHENBERICHT**

Nummer der Anmeldung

EP 80 81 0163

| EINSCHLÄGIGE DOKUMENTE | | | KLASSIFIKATION DER -2- ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| D,A | <u>GB - A - 917 564</u> (SPAKER) <br> * Figuren * <br><br> -- | 1 | |
| D,A | <u>US - A - 3 698 824</u> (LORIO) <br> * Figuren * <br><br> -- | 1 | |
| A | <u>DE - B - 1 298 888</u> (MALTER) <br> * Spalte 3, Zeilen 13-23 * <br><br> ---- | 1 | **RECHERCHIERTE SACHGEBIETE (Int. Cl. 3)** |